# EUROPEAN PATENT APPLICATION

(11) **EP 3 670 266 A1**
(43) Date of publication of application: **24.06.2020**
(21) Application number: 18214352.9
(22) Date of filing: 20.12.2018
(51) Int. Cl.: B60Q 9/00, G01C 21/36, G10K 15/02

(54) **VEHICLE SOUND GENERATING APPARATUS AND METHOD OF GENERATING SOUND IN A VEHICLE**

(71) Applicant: Alpine Electronics, Inc., Tokyo 145-8501 (JP)
(72) Inventor: Moldenhauer, Ingo, 70567 Stuttgart (DE)
(74) Representative: Schmitt-Nilson Schraud Waibel Wohlfrom Patentanwälte Partnerschaft mbB

(57) **Abstract**

A vehicle sound generating apparatus (10) comprises a processing device (20) configured to receive at least one reference signal (MPS, IMS) which is configured to derive therefrom at least one characteristic of an environment which the vehicle (1) is travelling in or proximate to, and at least one sound generator (30) coupled with the processing device (20) for generating and emitting sound with an environment imitation sound profile. The processing device (20) is configured to determine a countryside environment category from a plurality of countryside environment categories based on the at least one reference signal (MPS, IMS), and to determine the environment imitation sound profile of the emitted sound from a plurality of environment imitation sound profiles dependent on the determined countryside environment category. The at least one sound generator (30) is configured and arranged to emit sound having the determined environment imitation sound profile into a passenger cabin (3) of the vehicle (1) during vehicle motion.

## Description

The present disclosure relates to a vehicle sound generating apparatus in which at least one sound generator is configured and arranged to emit sound having a determined sound profile into a passenger cabin of the vehicle during vehicle motion, a method of generating sound in a vehicle, and a vehicle comprising such vehicle sound generating apparatus.

In modern vehicles, such as modern automobiles, acoustic insulation has been improving over the years so that the passenger cabin of the vehicle is getting more and more quietly when driving the vehicle. This provides, on the one hand, an advantage in that the driver's and passengers' driving comfort increases, on the other hand the driver and passengers may become more and more decoupled from the vehicle's environment or nature the vehicle is currently moving through. This may reduce driving safety, since the driver may not be aware or not get warned of any potential dangerous situations which are typical in a particular environment, such as potential pedestrian crossing when driving through a city or deer crossing when driving through a forest.

On the other hand, it is not desirable that outside noise enters into the vehicle's passenger cabin directly (like in a convertible, or through open window), as the existing outside noise is polluted with unwanted noise from the vehicle, road noise or traffic noise. This may distort the true "environment sound" which may be disadvantageous for the driver in correctly assessing the current driving situation. Moreover, noise entering the vehicle's passenger space from the outside may negatively affect the driver's or passengers' driving comfort.

In WO 2013/190637 A1 there is provided an imitation sound generation system for accurately informing a user of a road environment corresponding to a present position by imitation sound. A navigation device serving as an imitation sound generation system is provided with a map data storage unit for storing road network data including data relating to links indicating respective roads in a road network, a vehicle information acquisition unit for acquiring a present position, and a travel road determination unit for specifying a link to which the present position belongs.

In the map data storage unit, a plurality of pieces of imitation sound data associated with the respective links are stored, and a control unit determines imitation sound data associated with the link to which the present position belongs, from among the plurality of pieces of imitation sound data. The imitation sound generation system enables a user to perceive information corresponding to the state of the road (e.g., road conditions, a traffic situation, and weather conditions) by an imitation sound. In a situation of heavy traffic, for example, especially for a longer time period this may, however, reduce the driving safety as the driver may feel increasingly uncomfortable when heavy traffic imitation sound in a heavy traffic situation is emitted by the imitation sound generation system into the vehicle's passenger cabin.

It would therefore be beneficial to provide a vehicle sound generating apparatus and method of generating sound in a vehicle which are capable of increasing driver's and passengers' comfort when driving in a wide range of situations, while at the same time increasing driving safety by reducing the decoupling of the driver from an environment the vehicle is currently moving through.

The invention relates to a vehicle sound generating apparatus, a vehicle comprising such vehicle sound generating apparatus, and a method of generating sound in a vehicle according to the appended claims. Embodiments are disclosed in the dependent claims.

According to an aspect, there is disclosed a vehicle sound generating apparatus comprising a processing device configured to receive at least one reference signal which is configured to derive therefrom at least one characteristic of an environment which the vehicle is travelling in or proximate to, the processing device configured to determine a countryside environment category from a plurality of countryside environment categories based on the at least one reference signal, and at least one sound generator coupled with the processing device for generating and emitting sound with an environment imitation sound profile. The processing device is configured to determine the environment imitation sound profile of the emitted sound from a plurality of environment imitation sound profiles dependent on the determined countryside environment category, wherein the at least one sound generator is configured and arranged to emit sound having the determined environment imitation sound profile into a passenger cabin of the vehicle during vehicle motion.

According to another aspect, there is disclosed a method of generating sound in a vehicle, comprising receiving at least one reference signal which is configured to derive therefrom at least one characteristic of an environment which the vehicle is travelling in or proximate to, determining a countryside environment category from a plurality of countryside environment categories based on the at least one reference signal, determining an environment imitation sound profile of emitted sound from a plurality of environment imitation sound profiles dependent on the determined countryside environment category, and generating and emitting sound having the determined environment imitation sound profile into a passenger cabin of the vehicle during vehicle motion.

According to another aspect, there is disclosed a vehicle comprising such vehicle sound generating apparatus.

The invention provides the advantage that by means of the vehicle sound generating apparatus and the method of generating sound in a vehicle, driver's and passengers' comfort may be increased when driving in a quiet vehicle and in a wide range of situations, such as driving through a wide range of environment categories or types, while at the same time increasing driving safety, since the decoupling of the driver from an environment the vehicle is currently moving through is decreased. By means of the invention, the connection of the driver and/or passenger to the environment or nature may be improved. The driver or passengers may be provided with real nature imitation sound, which is free from any unwanted noise pollution (vehicle noise, road noise, traffic noise), which may otherwise decrease driver's and passengers' comfort.

According to an embodiment, the plurality of countryside environment categories includes at least two of the following: a city, grassland, bushland, forest, park, farm area, industry area, coast area, beach area, harbour area, train crossing, and an airport environment.

According to further embodiment, the plurality of environment imitation sound profiles includes sound profiles which are indicative of nature imitation sound associated with a respective one of the plurality of countryside environment categories.

Any aspects and embodiments described herein with respect to the vehicle sound generating apparatus can equally be employed in the method of generating sound in a vehicle with the processing device and/or the at least one sound generator configured (by software and/or hardware) to perform the respective steps appropriately.

According to an embodiment, the processing device is configured to determine the environment imitation sound profile of the emitted sound to be a composite sound profile composed from at least two or more of the plurality of environment imitation sound profiles which are combined with each other. For example, respective environment imitation sound profiles for the countryside environment categories city, harbour, coast, and airport environment may be combined.

According to an embodiment, the at least one sound generator is configured to change the emitted sound from a determined first environment imitation sound profile to a determined second environment imitation sound profile upon receiving at least one second reference signal indicative of an environment different from the at least one first reference signal. As such, the environment imitation sound profile may be changed when the vehicle moves from one environment type or category to another environment type or category.

According to an embodiment, the at least one sound generator is configured to change the emitted sound from the determined first environment imitation sound profile to the determined second environment imitation sound profile by at least one of fading out the first environment imitation sound profile and fading in the second environment imitation sound profile. For example, when the vehicle is approaching another environment type or category, the sound profile for the respective environment category is faded in for, e.g., 30 seconds. When the vehicle leaves an environment type or category, the sound profile for the respective environment category is faded out for, e.g., 30 seconds. Therefore, the sound profiles are not changed abruptly but gently.

In an embodiment of the invention, the vehicle sound generating apparatus further comprises a geographic location determining unit which is part of, or coupled with, the processing device. The geographic location determining unit may be configured to determine a geographic location associated with the vehicle and to provide the at least one reference signal. Preferably, the geographic location determining unit is configured to access map data for determining the geographic location. This provides an advantageous implementation for providing at least one reference signal which is configured to derive therefrom at least one characteristic of an environment which the vehicle is travelling in or proximate to. For example, the geographic location determining unit provides a respective reference signal which is indicative of a countryside environment the vehicle is currently driving through, such as a city or forest, for example by accessing map data at the current vehicle's position which are indicative of the surrounding countryside environment.

According to an embodiment, the geographic location determining unit is comprised in, or coupled with, a navigation system associated with the vehicle.

According to a further embodiment, the vehicle sound generating apparatus further comprises an image recognition unit being part of, or coupled with, the processing device, wherein the image recognition unit is coupleable with a camera for recording at least one image from at least part of vehicle's surroundings. The image recognition unit is configured to determine the at least one reference signal from the at least one image. Particularly, the image recognition unit is configured to perform an image recognition process on the at least one image for determining the at least one reference signal. This provides another advantageous implementation for providing at least one reference signal which is configured to derive therefrom at least one characteristic of an environment which the vehicle is travelling in or proximate to.

According to an embodiment, the embodiments implementing the geographic location determining unit and the image recognition unit may also be combined with each other to provide each at least one respective reference signal which may be combined by the processing device, or provide a combined reference signal to the processing device, which is configured to derive therefrom at least one characteristic of an environment which the vehicle is travelling in or proximate to.

According to an embodiment, the processing device is configured to determine a countryside environment category, which the vehicle is travelling proximate to (i.e., a countryside environment category adjacent to the current vehicle position), by determining that the vehicle is travelling on a road which is adjacent to the determined countryside environment category. In other words, if the vehicle is travelling on a road which is adjacent to or next to a particular countryside environment category, such as a forest or a coast area, this countryside environment category will be determined to be a countryside environment category which the vehicle is travelling proximate to.

According to another embodiment, the processing device is configured to determine a countryside environment category, which the vehicle is travelling proximate to, by determining that the vehicle is travelling within an area of a predetermined size adjacent to the determined countryside environment category. In other words, if the vehicle is travelling within an area, such as an area having 500 m or 2 km diameter or radius, which is adjacent to or next to a particular countryside environment category, such as a forest or a coast area, this countryside environment category will be determined to be a countryside environment category which the vehicle is travelling proximate to.

Particularly, the term "countryside environment category" shall be understood as being indicative of a particular type of countryside environment, such as a forest, coast, grassland, or man-made environment (also designated countryside environment) such as airport, city, harbour, etc. Particularly, the term shall not be understood as being indicative of a traffic situation, a road condition, a weather condition, and/or a danger situation associated with a current driving situation of the vehicle. Such situations are not understood as countryside environment, but are rather representing environmental conditions and properties which are not related to and indicative of countryside which the vehicle is travelling through or proximate to.

For example, each countryside environment category is indicative of one or more countrysides which are different from countryside environments associated with the respective other categories. A countryside environment can be characterized by one or a combination of countryside environment characteristics of nature, such as trees, hills, mountains, grassland, coast, beach, and/or of man-made countryside characteristics, such as houses, ships, buildings, pathways, airports, harbours, arrangement of buildings, city buildings, etc. The respective countryside environment categories or parts thereof may be stored in a memory on the vehicle, and/or may be stored remotely and accessed via a server remote from the vehicle, for example using an Internet connection.

The type or kind of reference signal configured to derive therefrom at least one characteristic of an environment may vary, as well as the number of reference signals used for this purpose. For example, the reference signal(s) may be indicative of or contain a geographic position and/or one or more attributes of the position and its surroundings, as may typically be used in map data visualisation or navigation applications. According to another embodiment, the reference signal(s) may be or may be indicative of map data in general or geographic position data of the vehicle (such as GPS raw data), wherein the processing device accesses a database to associate the received map data or geographic position data with a particular countryside environment category. If camera images and image recognition techniques are used, the reference signal(s) may be indicative of or contain visual features, descriptors, attributes and/or other data descriptions which are indicative of countryside environment characteristics, such as trees, hills, mountains, grassland, houses, ships, buildings, pathways, or parts thereof (such as edges, feature patterns, feature cluster), etc. According to another embodiment, the reference signal(s) may be or may be indicative of images in general (such as image raw data or pre-processed image data), wherein the processing device implements a corresponding image recognition process on the received images and accesses a database to associate image features or other image characteristics with environment characteristics, such as trees, buildings, etc., and a respective countryside environment category.

Further, if more than one kind of reference signal(s) is used, or if map data and image recognition data, as described above, are combined, some of the reference signals may be weighted differently than other reference signals when determining the respective countryside environment category.

Aspects of the invention and embodiments will now be described with reference to the following Figures in which
- Fig. 1: depicts a schematic diagram illustrating an exemplary vehicle comprising a vehicle sound generating apparatus according to an embodiment of the invention,
- Fig. 2: shows a vehicle sound generating apparatus according to an embodiment of the invention,
- Fig. 3: shows a flow diagram of a determination process according to an algorithm implemented in a vehicle sound generating apparatus according to an embodiment of the invention,
- Fig. 4: shows a flow diagram of a further determination process according to an algorithm implemented in a vehicle sound generating apparatus according to a further embodiment of the invention,
- Fig. 5: shows a flow diagram of a further determination process according to an algorithm implemented in a vehicle sound generating apparatus according to a further embodiment of the invention.

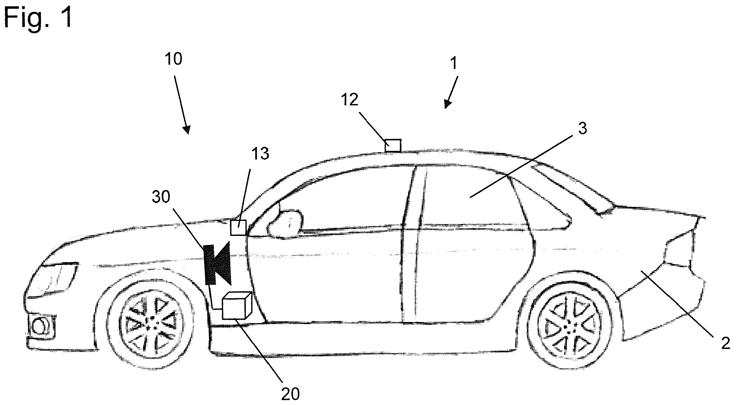

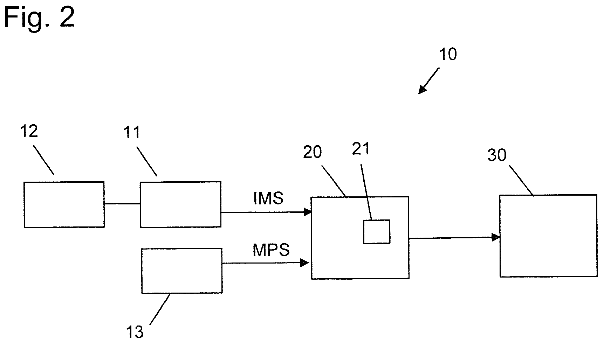

Fig. 1 shows a schematic view of a vehicle 1 according to an embodiment of the invention. Fig. 2 depicts a vehicle sound generating apparatus 10 according to an embodiment of the invention, which is implemented in the vehicle 1. The vehicle 1 comprises a vehicle chassis 2 which carries components typically used in a vehicle, and includes a passenger cabin 3 where a driver and optionally passengers are seated. As also shown in connection with Fig. 1 and 2, the vehicle 1, for example, comprises a vehicle camera 12, such as an omnidirectional camera with a 360° field of view or any other type of camera, which may be placed on the vehicle roof. Other types of cameras may also be used. The vehicle camera 12 may be coupled with an image recognition unit 11 which is part of, or coupled with, a processing device 20 explained in more detail below. The image recognition unit 11 may also be part of the camera 12, e.g. implemented in a camera image processor. In a preferred implementation, the camera 12 along with the processing device 20 and image recognition unit 11 are coupled with a vehicle communications bus not explicitly shown. For example, the vehicle communications bus may be a commonly known CAN-Bus, and may run through various regions of the vehicle and be coupled to various components of the vehicle.

In addition or alternatively to the camera 12, the vehicle 1 may comprise a geographic location determining unit 13 which is part of, or coupled with, the processing device 20. The geographic location determining unit 13 is configured to determine a geographic location associated with the vehicle 1, such as by using GPS (Global Positioning System) sensors and data as commonly known in the art. It is further configured to access map data (stored on the vehicle or navigation system or accessed remotely, e.g. via Internet access) for determining the vehicle's geographic location. For example, the geographic location determining unit 13 is comprised in, or coupled with, a navigation system associated with the vehicle 1, for instance implemented in a commonly known head unit (HU), not explicitly shown, of the vehicle 1.

Both camera 12 and/or geographic location determining unit 13 (or navigation system containing it) may be fixedly installed in the vehicle 1, or may be handheld apparatuses which are momentarily installed or loosely associated with the vehicle (e.g. carried in the dashboard) in the current driving situation.

The vehicle sound generating apparatus 10 further comprises at least one sound generator 30 coupled with the processing device 20 for generating and emitting sound with a particular sound profile. For example, the at least one sound generator 30 comprises one or more loudspeakers or may be coupled with such loudspeakers. The at least one sound generator 30 is coupled with the processing device 20 which serves as a control unit for generating the sound, i.e. provides the appropriate control signals to the respective loudspeaker. For example, the processing device 20 may incorporate a digital sound processor (DSP) which controls the one or more loudspeakers appropriately. In a DSP, control signals are generated which cause the sound generator 30 to emit sound waves having a particular volume level, tone, vibrancy, clarity, one or more particular frequencies, and/or frequency bandwidth, to emit the appropriate environment imitation sound profile. The at least one sound generator 30 can be located in any appropriate location of the vehicle 1, e.g. in the typical locations for vehicle loudspeakers.

In such configuration, the at least one sound generator 30 is configured and arranged to emit sound having a determined environment imitation sound profile into the passenger cabin 3 of the vehicle 1 during vehicle motion, e.g. emitted by one or more loudspeakers controlled by a DSP appropriately. Such environment imitation sound may be "composed", e.g. by the DSP, to increase driver's and passengers' comfort when driving in a wide range of situations, such as driving through a wide range of environments (environment categories or types), while at the same time increasing driving safety, since the decoupling of the driver from an environment the vehicle is currently moving through is decreased. By means of the invention, the connection of the driver and/or passenger to the environment or nature may be improved, even in vehicles which are insulated well against noise from outside. The driver or passengers may be provided with real nature imitation sound, which is free from any unwanted noise pollution (vehicle noise, road noise, traffic noise), which may increase driver's and passengers' comfort.

The processing device 20 may be part of a control unit, e.g., of an ECU or head unit, of the vehicle 1. As shown in Fig. 2, the processing device 20 may be, or may comprise one or more processors 21, such as microprocessors, which is programmed to perform the functions as set out herein. The processing device 20 is coupled with camera 12 and image recognition unit 11, and/or the geographic location determining unit 13 in wired manner or wirelessly, e.g. in a peer-to-peer fashion or through a vehicle's CAN bus. The processing device 20 is further coupled with one or more sound generators 30, either directly or via the vehicle's CAN bus, for emitting sound with a particular sound profile determined by the processing device 20.

The geographic location determining unit 13 provides at least one reference signal MPS to the processing device 20. For example, the reference signal MPS is configured to derive therefrom at least one characteristic of an environment which the vehicle is travelling in or proximate to. For instance, the at least one reference signal MPS is, or may be derived from, map data of a navigation system, wherein the map data include at least one descriptor or attribute indicative of the environment, as commonly known in the art.

The image recognition unit 11 analogously provides at least one reference signal IMS to the processing device 20. For example, the reference signal IMS is configured to derive therefrom at least one characteristic of an environment which the vehicle is travelling in or proximate to. For instance, the at least one reference signal IMS is, or may be derived from, image data of one or more images captured by the camera 12. The image data may be raw data or pre-processed, and may include features indicative of an environment and/or at least one descriptor indicative of a particular type of environment or component thereof, such as a descriptor of an edge of a building or features/descriptors of a moving object or forest, as commonly known in the art of image processing and recognition.

The processing device 20 may be implemented in software or hardware, in discrete or distributed manner, in any appropriate processing device of the vehicle. In one implementation, the processing device 20, the geographic location determining unit 13 and/or the image recognition unit 11 may be part of the same processing device (e.g. one of the processors of the ECU) and/or may be implemented in software. For the purposes of the present invention, the processing device 20 may perform some of the steps described herein alone or in combination with any other processing device, such as the processor of the ECU or navigation system.

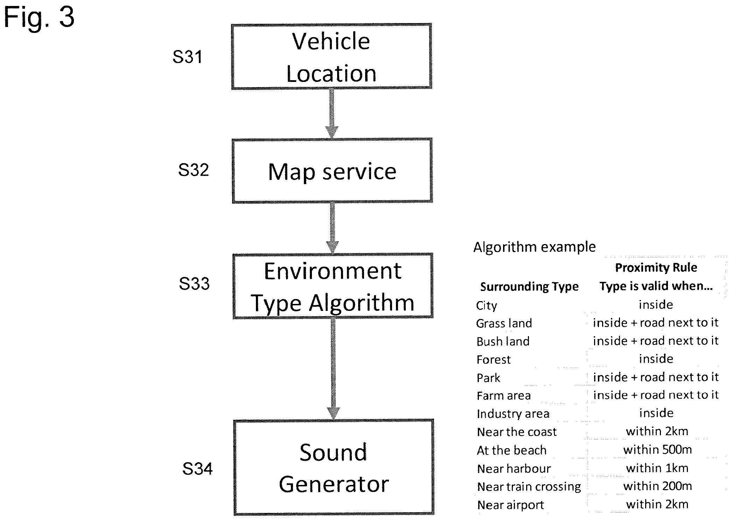

Fig. 3 shows a flow diagram of a determination process according to an algorithm implemented in a vehicle sound generating apparatus according to a first potential embodiment of the invention. In this embodiment, the processing device 20 is coupled with a geographic location determining unit 13, such as a navigation system. In step S31, the geographic location determining unit 13 determines the current vehicle location, e.g. through a GPS signal processing. In step S32, the geographic location determining unit 13 accesses a map database based on the GPS data in order to provide the at least one reference signal MPS to the processing device 20.

In step S33, in an environment type determining algorithm, the processing device 20 determines a countryside environment type or category from a plurality of countryside environment categories (which may be stored in a database in a memory on the vehicle, or accessed remotely from a database, e.g. through Internet access) based on the at least one reference signal MPS. For example, if the reference signal MPS is indicative of map data within a forest or next to an airport, the processing device 20 determines "forest" or "airport" as the determined countryside environment type or category from the plurality of countryside environment categories containing such type or category.

An algorithm example is shown in Fig. 3 on the right hand side of step S33. In this embodiment, the plurality of countryside environment categories includes the following: a city, grassland, bushland, forest, park, farm area, industry area, coast area, beach area, harbour area, train crossing, and an airport environment. It can, however, also include more or less, and any combination, of these categories. The proximity rule shown in the right column allows the processing device 20 to determine the appropriate category.

For example, it determines a countryside environment category, which the vehicle 1 is travelling proximate to (e.g. "near the coast", or "near the harbour"), by determining that the vehicle 1 is travelling on a road which is adjacent to the determined countryside environment category (i.e., "road next to it"), and/or by determining that the vehicle 1 is travelling within an area of a predetermined size adjacent to the determined countryside environment category (e.g., "within 2 km" or "within 200 m"). The area sizes shown in Fig. 3 may have any form, such as circular or any other geometric form, and may be designated by any type of suitable parameters (such as diameter, or edges).

From the determined countryside environment category in step S33, the processing device 20 then determines in step S34 one or more environment imitation sound profiles of the sound to be emitted by the sound generator 30 from a plurality of environment imitation sound profiles. Again, the plurality of environment imitation sound profiles may be stored in a database in a memory on the vehicle, or accessed remotely from a database, e.g. through Internet access. The at least one sound generator 30, e.g. loudspeaker, then emits sound having the determined environment imitation sound profile into the passenger cabin 3 of the vehicle 1 during vehicle motion, as described above.

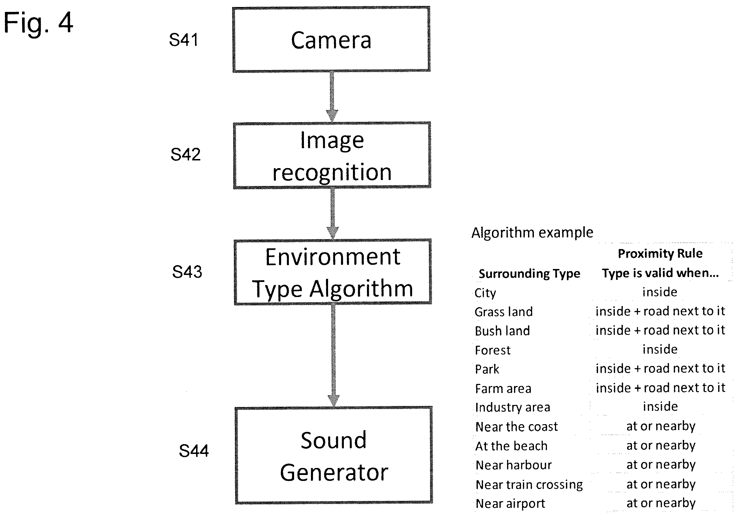

Fig. 4 shows a flow diagram of a further determination process according to an algorithm implemented in a vehicle sound generating apparatus 10 according to a further embodiment of the invention. In this embodiment, the processing device 20 is coupled with a camera 12 via an image recognition unit 11, as shown in Fig. 2, which may be implemented in the processing device 20 or separately, as set out above. In step S41, the camera 12 captures one or more images, such as individual images or a video stream from at least part of the vehicle's surroundings. As set out above, any suitable vehicle camera or handheld camera may be used for this purpose. For example, the camera 12 may capture omnidirectional images (with approx. 360° field of view), or images with any coverage of field of view, wherein multiple images may be framed together to, e.g., a panoramic image, or may be processed separately. In step S42, the image recognition unit 11 performs an image recognition process, as described in principle above, in order to provide the at least one reference signal IMS to the processing device 20.

In step S43, in an environment type determining algorithm, the processing device 20 determines a countryside environment type or category from a plurality of countryside environment categories based on the at least one reference signal IMS, similarly as described above with respect to Fig. 3. For example, if the reference signal IMS is indicative of image data, descriptors and/or attributes representative of a city or next to a harbour, the processing device 20 determines "city" or "near harbour" as the determined countryside environment type or category from the plurality of countryside environment categories containing such type or category.

An algorithm example is shown in Fig. 4 on the right hand side of step S43, which is similar to that of Fig. 3. Different from that of Fig. 3, the algorithm of Fig. 4 determines a countryside environment category, which the vehicle 1 is travelling proximate to (e.g. "near the coast", or "near the harbour"), by determining that the vehicle 1 is travelling "at or nearby", which may be determined from the reference signal IMS. For example, the reference signal IMS may be indicative of a certain extent or dimension of a detected feature, or certain relation of multiple features to each other, from which the algorithm may determine that a respective environment feature is "at or nearby". Like the algorithm according to Fig. 3, for example, it determines a countryside environment category, which the vehicle 1 is travelling proximate to (e.g. "near the coast", or "near the harbour"), by determining that the vehicle 1 is travelling on a road which is adjacent to the determined countryside environment category (i.e., "road next to it").

From the countryside environment category determined in step S43, the processing device 20 then determines from a plurality of environment imitation sound profiles one or more environment imitation sound profiles of the sound to be emitted by the sound generator 30 in step S44. Again, the plurality of environment imitation sound profiles may be stored in a database in a memory on the vehicle, or accessed remotely from a database, e.g. through Internet access. The at least one sound generator 30, e.g. loudspeaker, then emits sound having the determined environment imitation sound profile into the passenger cabin 3 of the vehicle 1 during vehicle motion, as described above.

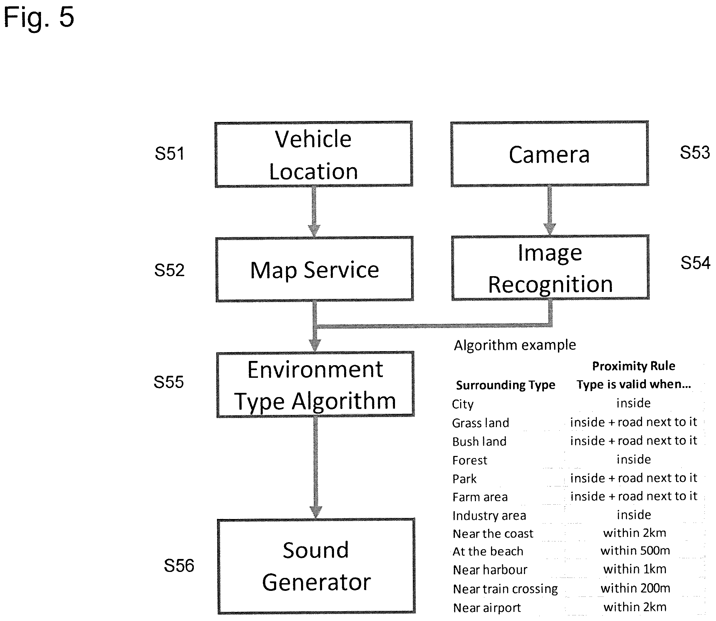

Fig. 5 shows a flow diagram of a further determination process according to an algorithm implemented in a vehicle sound generating apparatus according to a further embodiment of the invention. In this embodiment, the processing device 20 is coupled with a camera 12 via an image recognition unit 11 and a geographic location determining unit 13, as shown in Fig. 2, which both, or only one of them, may be implemented in the processing device 20 or separately, as set out above.

In step S51, the geographic location determining unit 13 determines the current vehicle location, e.g. through a GPS signal processing. In step S52, the geographic location determining unit 13 accesses a map database based on the GPS data in order to provide the at least one reference signal MPS to the processing device 20. Simultaneously, or basically at the same time or shortly before or afterwards, in step S53, the camera 12 captures one or more images, such as individual images or a video stream from at least part of the vehicle's surroundings. As set out above, any suitable vehicle camera or handheld camera may be used for this purpose. In step S54, the image recognition unit 11 performs an image recognition process, as described in principle above, in order to provide the at least one reference signal IMS to the processing device 20.

In step S55, an environment type determining algorithm performed on processing device 20 processes both at least one reference signals MPS and IMS to determine a countryside environment type or category from a plurality of countryside environment categories based on the at least one reference signals MPS and IMS, similarly as described above with respect to Figs. 3 and 4. According to a potential embodiment, the processing device may determine a greater environment region, for example, by using the reference signal(s) MPS, and may identify certain environment features within that area by using the reference signal(s) IMS. According to another embodiment, for instance, if a determination according to the reference signal(s) MPS is ambiguous (e.g., is ambiguous whether the region is a bush land or farm area), an unambiguous determination may be made by using the reference signal(s) IMS which is, e.g., indicative of certain features significant for a farm area. Thus, the final determination may be made to determine the region as "farm area" as the determined countryside environment type or category.

Generally, if more than one type of reference signal(s) is used, such as MPS and IMS, and are combined in the determination algorithm, some of the reference signals MPS and IMS may be weighted differently than respective other of the reference signals MPS and IMS when determining the respective countryside environment category.

An algorithm example is shown in Fig. 5 on the right hand side of step S55, which is similar to that of Fig. 3. In addition to that of Fig. 3, the algorithm of Fig. 5 may determine a countryside environment category by "fine tuning" with image information according to the reference signal(s) IMS (or vice versa), e.g. used in a different weighting than the reference signal(s) MPS, as basically described above. For example, the reference signal(s) IMS may be more significant of certain environment features actually present in the real environment, which may not be included in the map data. According to another embodiment, the map information (i.e. the reference signal(s) MPS) may be used to validate and weigh the image information (contained in the reference signal(s) IMS).

From the countryside environment category determined in step S55, the processing device 20 then determines from a plurality of environment imitation sound profiles one or more environment imitation sound profiles of the sound to be emitted by the sound generator 30 in step S56. The at least one sound generator 30, e.g. loudspeaker, then emits sound having the determined environment imitation sound profile into the passenger cabin 3 of the vehicle 1 during vehicle motion, as described above.

Generally, in embodiments of the invention, the environment imitation sound profile of the emitted sound may be a composite sound profile composed from at least two or more of the plurality of environment imitation sound profiles combined with each other. For example, if the vehicle is proximate to multiple countryside environment categories, respective environment imitation sound profiles may be combined, e.g. an airport imitation sound profile combined with a city imitation sound profile if the airport is within or close to a city. Another example for a combination may be a city plus harbour plus coast plus airport imitation sound profile.

Further, the emitted sound may be changed from a determined first environment imitation sound profile to a determined second environment imitation sound profile, e.g. when the vehicle moves from one environment into another, by fading out the first environment imitation sound profile (associated with the environment which is left) and/or fading in the second environment imitation sound profile (associated with the environment which is approached or entered). For example, when approaching an environment type, the sound is faded in for e.g. 30 seconds. When leaving an environment type, the sound is faded out for e.g. 30 seconds. Therefore, the imitation sound profiles may be changed gently, and not abruptly.

According to an embodiment, the plurality of countryside environment categories includes at least two of the following: a city, grassland, bushland, forest, park, farm area, industry area, coast area, beach area, harbour area, train crossing, and an airport environment. 11. That is, a determined countryside environment category as understood herein is not indicative of a particular traffic situation, road condition, weather condition, and/or danger situation associated with a current driving situation of the vehicle.

Accordingly, the plurality of environment imitation sound profiles may include respective sound profiles which are indicative of nature imitation sound associated with a respective one of the countryside environment categories. For example, the following nature imitation sound profiles may be stored in a database, e.g. on the vehicle or accessible remotely through the Internet:
City - traffic, bus, subways, people talking...
Grass land - soft wind, whims, sheep...
Bush land - singing birds...
Forest without water - woodpecker...
Forest with water - as above + creek
Park without water - cicada, crow...
Park with water - as above + small creek / fountain...
Farm area - cow, horse, chicken, goose...
Industry area - machines, construction sound...
Wider coastal area - seagull...
Near the beach - waves...
Near a river - small waves, ship sounds...
Near harbor - ship sounds, horn...
Near train crossing - train sound, train horn...
Near airport - airplane sounds...

With embodiments of the invention, consciousness connection of the driver and/or passenger to the environment or nature may be improved. Embodiments may provide real nature imitation sound, which is free of any unwanted noise pollution (vehicle, road, traffic noise), and increases the driver's or passengers' comfort.

## Claims

1. A vehicle sound generating apparatus (10), comprising:
- a processing device (20) configured to receive at least one reference signal (MPS, IMS) which is configured to derive therefrom at least one characteristic of an environment which the vehicle (1) is travelling in or proximate to,
- the processing device (20) configured to determine a countryside environment category from a plurality of countryside environment categories based on the at least one reference signal (MPS, IMS),
- at least one sound generator (30) coupled with the processing device (20) for generating and emitting sound with an environment imitation sound profile,
- wherein the processing device (20) is configured to determine the environment imitation sound profile of the emitted sound from a plurality of environment imitation sound profiles dependent on the determined countryside environment category,
- wherein the at least one sound generator (30) is configured and arranged to emit sound having the determined environment imitation sound profile into a passenger cabin (3) of the vehicle (1) during vehicle motion.

2. The vehicle sound generating apparatus according to claim 1, wherein the plurality of countryside environment categories includes at least two of the following: a city, grassland, bushland, forest, park, farm area, industry area, coast area, beach area, harbour area, train crossing, and an airport environment.

3. The vehicle sound generating apparatus according to claim 1 or 2, wherein the plurality of environment imitation sound profiles includes sound profiles which are indicative of nature imitation sound associated with a respective one of the plurality of countryside environment categories.

4. The vehicle sound generating apparatus according to one of claims 1 to 3, wherein the processing device (20) is configured to determine the environment imitation sound profile of the emitted sound to be a composite sound profile composed from at least two or more of the plurality of environment imitation sound profiles which are combined with each other.

5. The vehicle sound generating apparatus according to one of claims 1 to 4,
- wherein the processing device (20) is configured to receive in sequence at least a first reference signal (MPS, IMS) which is configured to derive therefrom at least one characteristic of a first environment which the vehicle is travelling in or proximate to, and at least a second reference signal (MPS, IMS) which is configured to derive therefrom at least one characteristic of a second environment which the vehicle is travelling in or proximate to after the first environment,
- the processing device (20) is configured to determine in sequence a first countryside environment category from the plurality of countryside environment categories based on the at least one first reference signal, and a second countryside environment category from the plurality of countryside environment categories based on the at least one second reference signal
- the processing device is configured to determine a first environment imitation sound profile of the emitted sound from the plurality of environment imitation sound profiles dependent on the determined first countryside environment category, and a second environment imitation sound profile of the emitted sound from the plurality of environment imitation sound profiles dependent on the determined second countryside environment category,
- wherein the at least one sound generator (30) is configured to change the emitted sound from a determined first environment imitation sound profile to a determined second environment imitation sound profile upon receiving at least one second reference signal (MPS, IMS) indicative of an environment different from the at least one first reference signal (MPS, IMS).

6. The vehicle sound generating apparatus according to claim 5, wherein the at least one sound generator (30) is configured to change the emitted sound from the determined first environment imitation sound profile to the determined second environment imitation sound profile by at least one of fading out the first environment imitation sound profile and fading in the second environment imitation sound profile.

7. The vehicle sound generating apparatus according to one of claims 1 to 6, further comprising a geographic location determining unit (13) being part of, or coupled with, the processing device (20), wherein the geographic location determining unit (13) is configured to determine a geographic location associated with the vehicle (1) and to provide the at least one reference signal (MPS), particularly wherein the geographic location determining unit (13) is configured to access map data for determining the geographic location.

8. The vehicle sound generating apparatus according to claim 7, wherein the geographic location determining unit (13) is comprised in, or coupled with, a navigation system associated with the vehicle (1).

9. The vehicle sound generating apparatus according to one of claims 1 to 8, further comprising an image recognition unit (11) being part of, or coupled with, the processing device (20), wherein the image recognition unit (11) is coupleable with a camera (12) for recording at least one image from at least part of vehicle's surroundings and configured to determine the at least one reference signal (IMS) from the at least one image.

10. The vehicle sound generating apparatus according to claim 9, wherein the image recognition unit (11) is configured to perform an image recognition process on the at least one image for determining the at least one reference signal (IMS).

11. The vehicle sound generating apparatus according to one of claims 1 to 10, wherein the determined countryside environment category is not indicative of a traffic situation, a road condition, a weather condition, and/or a danger situation associated with a current driving situation of the vehicle.

12. The vehicle sound generating apparatus according to one of claims 1 to 11, wherein the processing device (20) is configured to determine a countryside environment category, which the vehicle (1) is travelling proximate to, by determining that the vehicle (1) is travelling on a road which is adjacent to the determined countryside environment category.

13. The vehicle sound generating apparatus according to one of claims 1 to 12, wherein the processing device (20) is configured to determine a countryside environment category, which the vehicle (1) is travelling proximate to, by determining that the vehicle (1) is travelling within an area of a predetermined size adjacent to the determined countryside environment category.

14. A vehicle (1) comprising a vehicle sound generating apparatus (10) according to one of the preceding claims.

15. A method of generating sound in a vehicle (1), comprising:
- receiving at least one reference signal (MPS, IMS) which is configured to derive therefrom at least one characteristic of an environment which the vehicle (1) is travelling in or proximate to,
- determining a countryside environment category from a plurality of countryside environment categories based on the at least one reference signal (MPS, IMS),
- determining an environment imitation sound profile of emitted sound from a plurality of environment imitation sound profiles dependent on the determined countryside environment category,
- generating and emitting sound having the determined environment imitation sound profile into a passenger cabin (3) of the vehicle (1) during vehicle motion.
